(19) Europäisches Patentamt
European Patent Office
Office européen des brevets

(11) Veröffentlichungsnummer: **0 505 863 B1**

(12) **EUROPÄISCHE PATENTSCHRIFT**

(45) Veröffentlichungstag der Patentschrift: **26.07.95**

(51) Int. Cl.6: **B01J 21/06**, B01J 23/44, C11C 3/12

(21) Anmeldenummer: **92104441.8**

(22) Anmeldetag: **14.03.92**

(54) **Katalysator zur Härtung von Fettsäuren und Verfahren zu seiner Herstellung.**

(30) Priorität: **22.03.91 DE 4109502**

(43) Veröffentlichungstag der Anmeldung:
**30.09.92 Patentblatt 92/40**

(45) Bekanntmachung des Hinweises auf die Patenterteilung:
**26.07.95 Patentblatt 95/30**

(84) Benannte Vertragsstaaten:
**BE DE ES FR GB IT NL PT**

(56) Entgegenhaltungen:
**EP-A- 0 327 723**
**US-A- 4 479 902**

**CHEM.-ING.-TECH., Band 52, Nr. 8, 1980, Seiten 628-634, Verlag Chemie GmbH, D-6940, Weinheim, DE; D. KOTH et al.: "Eigenschaften hochtemperaturhydrolytisch hergestellter Kieselsäuren und Metalloxide für katalysatoren"**

(73) Patentinhaber: **Degussa Aktiengesellschaft Weissfrauenstrasse 9 D-60311 Frankturt (DE)**

Patentinhaber: **Henkel Kommanditgesellschaft auf Aktien**

**D-40191 Düsseldorf (DE)**

(72) Erfinder: **Schäfer-Sindlinger, Adolf, Dr. Nussbaumplatz 6 W-6000 Frankturt 60 (DE)**
Erfinder: **Arntz, Dietrich, Dr. Lorsbachstrasse 32 W-6370 Oberursel (DE)**

(74) Vertreter: **Weber, Wolfgang Degussa AG Fachbereich Patente Postfach 1345 D-63403 Hanau (DE)**

**Beschreibung**

Die Erfindung betrifft einen geformten Katalysator zur Härtung ungesättigter Fettsäuren aus einem innigen Gemisch aus Titanoxid und fein verteiltem Palladium-Metall.

Fettsäuren stellen ein wesentliches Zwischenprodukt in der Fettchemie dar. Sie werden entweder durch Oxidation von Paraffinen, Oxosynthese aus Olefinen, Verseifung von Nitrilen oder durch Fettspaltung gewonnen. Das letztere Verfahren hat seine große Bedeutung durch die Nutzung von nachwachsenden Rohstoffen.

Die Fettsäuren aus pflanzlichen oder tierischen Quellen haben Kettenlängen von 12 bis 30 Kohlenstoffatomen. Es handelt sich zumeist um ungesättigten Fettsäuren mit bis zu 3 Doppelbindungen. Diese Doppelbindungen, insbesondere die dreifachen Doppelbindungen, sind der Grund für die geringe thermische Stabilität und leichte Oxydierbarkeit der ungesättigten Fettsäuren.

Für Anwendungen in der Industrie müssen die Doppelbindungen möglichst vollständig durch Hydrierung bei gleichzeitiger Aufrechterhaltung des Säurecharakters der Fettsäuren entfernt werden. Eine Hydrierung zu Fettalkoholen ist in diesem Fall unerwünscht. Dieser zu gesättigten Fettsäuren ohne Doppelbindungen in der Kohlenstoffkette führende Vorgang wird auch als Härtung der Fettsäuren bezeichnet.

Die Qualität gehärteter Fettsäuren wir durch Jodzahl und Säurezahl nach den Vorschriften des Deutschen Arzneibuches, 7. Auflage 1968, bestimmt. Die Jodzahl (JZ) ist eine Maßzahl für den Gehalt an ungesättigten Fettsäuren in Fetten und die Säurezahl (SZ) dient zur Bestimmung des Gehaltes an freien organischen Säuren in Fetten.

Natürliche Fette weisen je nach dem Grad der Sättigung Jodzahlen zwischen 150 (Sojaöl) und 50 (Rindertalg) auf. Ziel der technischen Härtung von Fettsäuren aus solchen natürlichen Quellen ist die Verminderung der Jodzahl bis auf Werte unter 1 bei möglichst unveränderter Säurezahl zur Verbesserung von Farbe, Geruch und Hitzestabilität.

Die zur Herstellung technischer Fettsäureprodukte eingesetzten Rohfettsäuren sind zumeist stark verunreinigte Abfallstoffe anderer Industriezweige. Die Hydrierung dieser Rohfettsäuren erfolgt vorwiegend noch in Batch-Verfahren bei Temperaturen von 100 bis 300 °C unter einem erhöhten Wasserstoffdruck von 0,15 bis 3,5 MPa in Anwesenheit eines geeigneten Katalysators. Hierfür werden hauptsächlich Nickel-Katalysatoren in Form von fein verteiltem Nickel entweder direkt oder auf Siliziumoxid als Träger (Ullmanns Encyclopedia of Industrial Chemistry, Vol A10, page 268, VCH Weinheim 1987) eingesetzt.

Nachteilig bei diesen Verfahren ist der hohe Katalysatorverbrauch durch die in den Rohfettsäuren enthaltenen Katalysatorgifte (Schwefel-, Phosphor-, Chlor- und Stickstoffverbindungen), die Bildung von Nickelseifen durch die Fettsäuren und die Notwendigkeit, den in die Rohfettsäuren eingebrachten Katalysator nach der Härtung durch Filtration von den Fettsäuren abzutrennen. Zur Entfernung der Nickelseifen muß das Produkt noch zusätzlich destilliert werden.

Die Standzeit der Katalysatoren kann verlängert und damit der Katalysatorverbrauch verringert werden, wenn die Rohfettsäuren vor der Härtung destilliert werden. Das bedeutet jedoch die Einschaltung eines zusätzlichen Verfahrensschrittes und damit im allgemeinen eine Verringerung der Wirtschaftlichkeit des gesamten Prozesses. Ein wesentliches Kriterium für die Beurteilung der Güte eines Katalysators für die Härtung ist daher seine Standzeit im Betrieb bei Einsatz von Rohfettsäuren, d. h. seine Resistenz gegenüber Katalysatorgiften.

Neben den Nickel-Katalysatoren sind Edelmetall-Trägerkatalysatoren für die Härtung von Fettsäuren bekannt. Ihre Vorteile liegen in einer einfachen Prozeßführung und dem Ausbleiben von Seifenbildung. Sie werden jedoch auch leicht durch die in den Rohfettsäuren enthaltenen Katalysatorgifte geschädigt (siehe zum Beispiel M. Zajcew: "Fett-Hydrierung mit Palladium als Katalysator VII: Fettsäuren", in Fette•Seifen•Anstrichmittel, 66 (1964), 794). Zwar lassen sich die Edelmetallträgerkatalysatoren relativ leicht mit nur geringen Edelmetallverlusten wieder aufarbeiten, trotzdem werden diese Katalysatoren hauptsächlich für die Härtung von destillierten Fettsäuren eingesetzt, um die Vergiftung der Katalysatoren gering zu halten.

Edelmetall-Trägerkatalysatoren eignen sich besonders für die kontinuierliche Härtung von Fettsäuren. Voraussetzung dafür ist allerdings, daß neben der aktiven Edelmetallkomponente auch das Trägermaterial selbst ausreichend stabil gegenüber dem Angriff der Fettsäuren ist. Die Katalysatoraktivität wird im Fall der kontinuierlichen Härtung durch den sogenannten LHSV-Wert (Liquid hourly space velocity) charakterisiert. Er beschreibt, wieviel Flüssigkeitsvolumen relativ zum Volumen des Katalysators pro Stunde bei gegebenen Prozeßbedingungen (Temperatur, $H_2$-Druck) in gewünschter Weise umgesetzt werden kann.

In der kanadischen Patentschrift CA 1 157 844 wird für die kontinuierliche Härtung von Fettsäuren ein Palladium-Katalysator auf Aktivkohle vorgeschlagen. Aus Beispiel 7 der Patentschrift geht hervor, daß dieser Katalysator bei LHSV-Werten von 0,2 $h^{-1}$ in der Lage ist, destillierte Rindertalgfettsäuren mit einer Jodzahl von 58 bis auf Endjodzahlen von 0,2 bis 0,7 zu härten. Die Temperatur betrug dabei 190 °C und der Wasserstoffdruck 2,5 MPa. Bei Erhöhung des LHSV-Wertes auf 0,6 $h^{-1}$ (Beispiel 8) erhöhte sich auch die Endjodzahl auf 2,5 bis 3,3. Die relativ guten Härtungsergebnisse für destillierte Fettsäuren bei kleinen LHSV-Werten (0,2 $h^{-1}$) verschlechtern sich erfahrungsgemäß beim Einsatz von Rohfettsäuren erheblich. Dieser Katalysator ist daher für eine wirtschaftliche Fettsäurehärtung im großtechnischen Maßstab nicht einsetzbar. Die erzielbaren LHSV-Werte sind zu gering und die notwendige Destillation der Rohfettsäuren bedeuten einen zusätzlichen, kostenintensiven Prozeßschritt.

Neben Edelmetallkatalysatoren auf Aktivkohleträgern sind auch solche auf oxidischen Trägern bekannt geworden. Sie werden jedoch lediglich zur Selektivhärtung von Fettsäuren in der Nahrungsmittelindustrie eingesetzt. So beschreibt zum Beispiel die US-PS 4 479 902 einen Katalysator aus Platin oder Palladium auf einem Träger aus $TiO_2$, $Ta_2O_5$, $V_2O_5$ oder $Nb_2O_5$ zur selektiven Härtung von Sojaöl auf Jodzahlen von 100. Dieser Katalysator ist wegen seiner hohen Selektivität nicht für die Durchhärtung von Fettsäuren geeignet.

Es ist deshalb eine Aufgabe der Erfindung, einen Katalysator für die kontinuierliche Härtung von Rohfettsäuren aus der Fettspaltung mit verbesserter Aktivität, geringer Vergiftungsneigung und guter Säurestabilität anzugeben, der es gestattet, bei einer Belastung mit LHSV-Werten $\geq$ 1 $h^{-1}$ Rohfettsäuren über lange Standzeiten im Betrieb zu härten. Eine weitere Aufgabe der Erfindung besteht in der Entwicklung eines Verfahrens zur Herstellung des Katalysators.

Die erste Aufgabe wird erfindungsgemäß durch einen geformten Katalysator zur Härtung ungesättigter Fettsäuren aus einem innigen Gemisch aus Titanoxid und fein verteiltem Palladium-Metall gelöst, welcher **dadurch gekennzeichnet** ist,
daß das pyrogene Titanoxid eine Röntgenstruktur aus 20 bis 40 % Rutil und 80 bis 60 % Anatas aufweist und zu Formkörpern mit einer BET-Oberfläche von 50 ± 15 $m^2/g$ und einem Gesamtporenvolumen von 0,25 bis 0,75 ml/g verformt ist und daß das Palladium-Metall im Formkörper homogen verteilt vorliegt, einen Anteil am Gesamtgewicht des Katalysators von 0,5 bis 10 Gew.-% hat und eine Kohlenmonoxid-Adsorption von 1,0 bis 2,0 ml CO/g Katalysator aufweist.

In einer bevorzugten Ausführungsform ist der Katalysator dadurch gekennzeichnet, daß das pyrogene Titanoxid eine mittlere Größe der Primärteilchen von 20 nm, eine Dichte von 3,7 $g/cm^3$ und die Verunreinigungen an Siliciumdioxid, Aluminiumoxid und Eisenoxid unter 0,5 Gew.-% liegen.

Bevorzugt sieht man für das Palladium-Metall einen Anteil am Gesamtgewicht des Katalysators von 0,5 bis 5 und insbesondere 1,5 bis 2,5 % vor.

Der Katalysator erweist sich als besonders wirkungsvoll, wenn das Palladium-Metall auf dem pyrogenen Titanoxid fein verteilt mit Kristallitgrößen von 5 bis 50 nm vorliegt.

Die Erfindung ist nicht auf eine spezielle Form der Katalysatorkörper beschränkt, sondern es eignen sich gleichermaßen gut Katalysatoren in Granulatform, in Pelletform oder Katalysatoren mit extrudierten Trägern, die nach bekannten Verfahren hergestellt werden können.

Die hervorragenden Eigenschaften des Katalysators können unter anderem auf die Eigenschaften des pyrogenen Titanoxids zurückgeführt werden. Es weist im allgemeinen eine mittlere Primärteilchengröße von etwa 20 nm und eine BET-Oberfläche von 50 $m^2/g$ auf. Seine Kristallstruktur ist durch einen hohen Anteil von 20 - 40 % Rutil gekennzeichnet. Bei den im Stand der Technik (US-PS 4,479,902) eingesetzten Titanoxiden handelt es sich dagegen um Titanoxide, die nach dem Sulfat- oder Chloridverfahren in einem Fällungsprozeß hergestellt werden. Diese Titanoxide haben in der Regel eine wesentlich größere BET-Oberfläche als pyrogenes Titanoxid. So hat das in der US-PS 4,479,902 eingesetzte Oxid eine Oberfläche von 130 $m^2/g$. Die gefällten Titanoxide sind entweder amorph oder liegen in der Anatasmodifikation vor.

Für großtechnische Anwendungen werden die gefällten Titanoxide in einem Drehrohrofen kalziniert. Es entstehen dabei je nach Prozeßführung Titanoxid- Pulver der Anatas oder Rutilmodifikation mit Teilchendurchmesser von 0,3 $\mu m$ und einer kleinen spezifischen Oberfläche von 10 $m^2/g$. Diese Materialien sind für katalytische Anwendungen nicht mehr geeignet.

Die noch zu besprechenden Beispiele zeigen, daß der erfindungsgemäße Katalysator eine wesentlich bessere katalytische Aktivität aufweist als Vergleichskatalysatoren, die entsprechend dem Stand der Technik unter Verwendung von gefällten Titanoxiden mit amorpher oder Anatasstruktur hergestellt werden. Dies ist überraschend, da die für die Katalyse zur Verfügung stehende Oberfläche bei den gefällten Titanoxiden wesentlich größer als bei pyrogenem Titanoxid ist. Die Gründe für die bessere katalytische Aktivität sind noch nicht geklärt. Offensichtlich handelt es sich bei dem erfindungsgemäßen Katalysator um eine optimale Kombination von zur Verfügung stehender Oberfläche und Kristallstruktur an dieser Oberfläche.

Der erfindungsgemäße Katalysator zeichnet sich durch eine gute Säurestabilität von aktiver Komponente und Trägermaterial aus. Diese Eigenschaft ist für einen störungsfreien Langzeitbetrieb bei der kontinuierlichen Fettsäurehärtung von entscheidender Bedeutung. Besonders vorteilhaft ist die Möglichkeit, den Katalysator mit Luftsauerstoff zu regenerieren. Dies ist im kontinuierlichen Betrieb von Zeit zu Zeit notwendig, um kohlenstoffhaltige Ablagerungen auf dem Trägermaterial durch Abbrennen zu entfernen und die ursprüngliche Katalysatoraktivität wiederherzustellen.

Das bevorzugte Einsatzgebiet des erfindungsgemäßen Katalysators ist wegen seiner guten Säurestabilität, hohen Aktivität und geringen Vergiftbarkeit die kontinuierliche Härtung von aus der Fettspaltung gewonnenen Rohfettsäuren im Rieselbett. Die Härtung von Destillatfettsäuren ist naturgemäß problemlos möglich.

Die zweite Aufgabe der Erfindung, nämlich die Bereitstellung eines geeigneten Verfahrens zur Herstellung des erfindungsgemäßen Katalysators wird durch ein Herstellungsverfahren gelöst, welches folgende allgemeine Schritte umfaßt: Verformen des pyrogenen Titanoxids unter Zusatz üblicher Verarbeitungshilfsmittel zu gewünschten Formkörpern im Grünzustand, Trocknen und anschließendes Kalzinieren der Grünkörper zur Entfernung der Verarbeitungshilfsmittel, Imprägnieren der kalzinierten Titanoxid-Formkörper mit einer wäßrigen Palladiumsalz-Lösung, Trocknen des imprägnierten Formkörpers und Reduzieren und Aktivieren dieser Katalysatorvorstufe im Wasserstoffstrom. Dieses Herstellungsverfahren ist dadurch gekennzeichnet, daß die Titanoxid-Grünkörper zunächst 12 Stunden bei 110 °C getrocknet und dann für die Dauer von 0,5 bis 5, vorzugsweise 1 Stunde bei Temperaturen von 350 bis 450, insbesondere um 400 °C kalziniert werden, der pH-Wert der zum Imprägnieren eingesetzten Palladiumsalz-Lösung auf pH = 4 eingestellt wird und Menge und Konzentration der Lösung so bemessen werden, daß der Palladium-Anteil des fertigen Katalysators 0,5 bis 10, vorzugsweise 0,5 bis 5 und insbesondere 1,5 bis 2,5 % des Gewichtes beträgt, das Trocknen des imprägnierten Formkörpers in einem Vakuum-Trockenschrank von 70 bis 100 °C für die Dauer von 2 bis 3 Stunden erfolgt und die abschließende Reduktion und Aktivierung des Katalysators im Wasserstoffstrom bei Temperaturen von 150 bis 300 und vorzugsweise von 200 bis 250 °C für die Dauer von 0,5 bis 10, vorzugsweise für die Dauer von 0,5 bis 2 Stunden durchgeführt wird.

Zum Imprägnieren des kalzinierten Formkörpers kommen $PdCl_2$, $PdBr_2$, $Pd(NO_3)_2 \cdot nH_2O$, $PdJ_2$, $PdSO_4$ und die Komplexsalze Tetraaminpalladium(II)-chlorid $[Pd(NH_3)_4]Cl_2$ und Tetraaminpalladium(II)-nitrat $[Pd(NH_3)_4](NO_3)_2$ in Frage.

Das erfindungsgemäße Herstellungsverfahren gewährleistet durch die Kombination an sich bekannter Verfahrensschritte und durch die geeignete Wahl der Verfahrensparameter, daß Kristallstruktur und spezifische Oberfläche des pyrogenen Titanoxids beim Kalzinieren nur geringfügig verändert werden, so daß die katalytischen Eigenschaften des pyrogenen Titanoxids voll erhalten bleiben. Insbesondere verhindert die Beschränkung der Kalzinierungstemperatur auf Werte unter 500 °C eine verstärkte Phasenumwandlung von Anatas in Rutil verbunden mit Kornvergrößerungen und einer Abnahme der BET-Oberfläche.

Der erfindungsgemäße Katalysator ist besonders für einen kontinuierlichen Betrieb bei der Härtung von Fettsäuren geeignet. Er weist selbst bei Verwendung von Rohfettsäuren eine geringe Vergiftbarkeit auf und erreicht ohne Regeneration Standzeiten im Betrieb, die herkömmliche Nickelkatalysatoren nur nach mehrfacher Regeneration leisten.

Die Wirksamkeit des erfindungsgemäßen Katalysators aus einem innigen Gemisch aus pyrogenem Titanoxid und fein verteiltem Palladium-Metall wurde in gründlichen Versuchsreihen belegt und seine Überlegenheit gegenüber Katalysatoren aus dem Stand der Technik aus Palladium-Metall und gefälltem Titanoxid oder Aktivkohle nachgewiesen.

Zur Charakterisierung der Katalysatoren wurden nach dem Kalzinieren die spezifische BET-Oberfläche der Formkörper, ihr Porenvolumen und ihre Porenradienverteilung bestimmt und an den fertigen Katalysatoren die aktive Metalloberfläche durch CO-Adsorptionsmessungen ermittelt.

Die Bestimmung der spezifischen Oberfläche ist in DIN 66 131 ("Bestimmung der spezifischen Oberfläche nach BET") genormt. Bei den Poren wird entsprechend einer IUPAC-Empfehlung zwischen Mikro-, Meso- und Makroporen unterschieden, die wie folgt voneinander abgegrenzt sind:

| Mikroporen $\phi$ | < 2 nm |
| Mesoporen $\phi$ | 2 - 50 nm |
| Makroporen $\phi$ | > 50 nm |

Das Volumen der Mikroporen wird über die Stickstoff-Adsorption und Auswertung nach Brunauer, Emmett und Teller ermittelt. Für die Bestimmung der Mesoporen wird die Stickstoff-Adsorption nach De Boer ausgewertet. Die Makroporen werden mit Hilfe der Quecksilber-Porosometrie bestimmt.

Als Maß für die aktive Metalloberfläche der fertigen Katalysatoren dient die Kohlenmonoxid-Adsorption. Die Höhe dieses Wertes gibt Auskunft über die Güte der Metalldispersion, Durch eine zusätzliche transmissionselektronenmikroskopische (TEM) Untersuchung kann die Korngrößenverteilung der Metall-Kristallite direkt bestimmt werden.

Die Methoden zur Oberflächen- und Porenvolumenbestimmung sind in den folgenden Artikeln und Büchern näher beschrieben:

1. S. Brunauer, P.H. Emmet, E. Teller
J. Am. Chem. Soc., 60 (1938) 309
2. J.H. De Boer
"The Dynamic Character of Adsorption"
The Clarendon Press, Oxford, 1953
3. S. Brunauer
"Sorption of Gases and Vapours"
Princeton Univ. Press, Princeton, New Jersey, 1945
4. T. Paryczak
"Gas Chromatography in Adsorption and Catalysis"
E. Horwood Ltd., John Wiley & Sons, New York, 1986

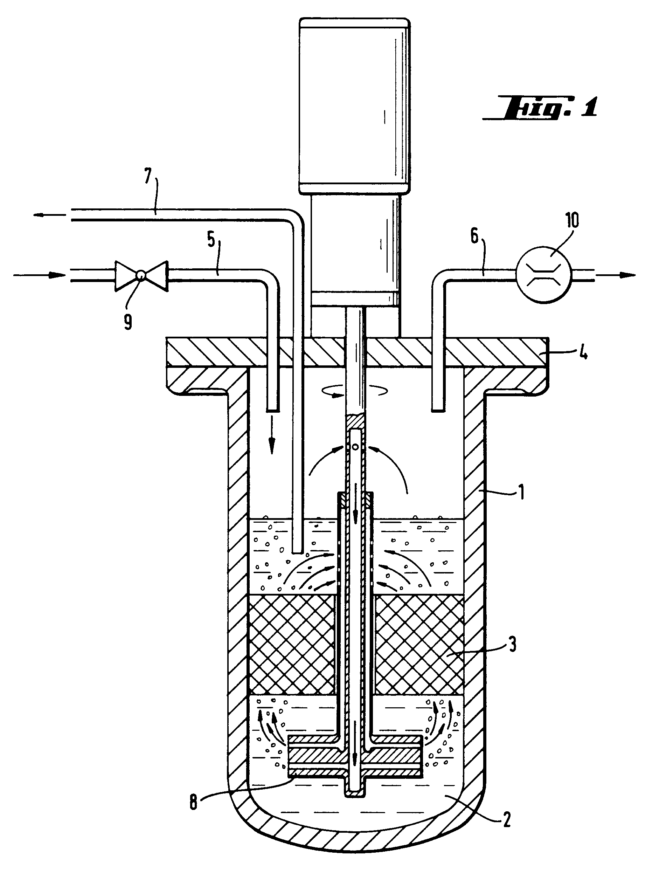

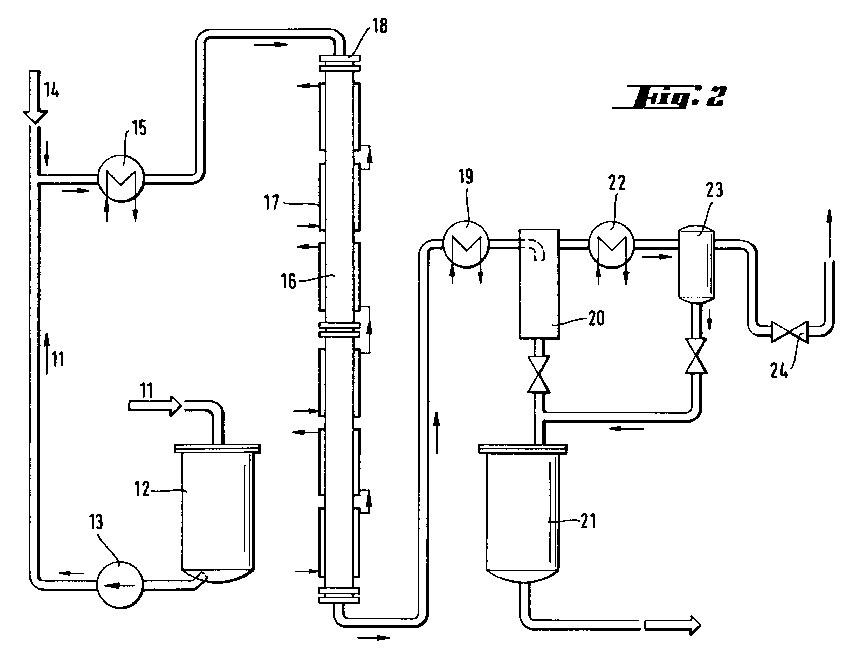

Die Eigenschaften der erfindungsgemäßen Katalysatoren wurden beim Einsatz in Batch-Härtungsprozessen und bei der kontinuierlichen Härtung im Rieselbett überprüft. Die verwendeten Apparaturen sind in den Figuren 1 und 2 dargestellt. Es zeigen:

Figur 1: Hastelloy-Autoklav mit 1 Liter Fassungsvermögen für die Fettsäurehärtung im Batch-Verfahren.

Figur 2: Fetthärtungs-Anlage für die kontinuierliche Härtung von Fettsäuren im Rieselbett.

Neben den Katalysatoren gemäß der Erfindung wurden auch herkömmliche Katalysatoren aus Titanoxid, Quarz und Aktivkohle getestet. Zum Einsatz kamen Katalysatoren in Granulat-, Pellet- und Extrudatform. Im folgenden wird die Herstellung dieser Formkörper erläutert.

Beispiel 1 (Herstellung der Extrudate):

1.000 g pyrogenes Titanoxid P 25 (Fa. Degussa) und 5.000 ml VE-Wasser (vollentsalztes Wasser) wurden in einem Knetextruder (Fa. Werner und Pfleiderer) vorgelegt und kurz geknetet bis Wasser und Titanoxid homogen vermischt waren. Dann wurden 10 g Tylose (MH 1.000; Fluka) in 200 ml VE-Wasser gelöst hinzugefügt.

Die Mischung wurde anschließend eine Stunde geknetet, bis eine plastische Masse entstanden war. Danach wurde die Masse zu Formkörpern von 1 mm Durchmesser und ca. 10 mm Länge extrudiert und für ca. 12 Stunden in einem Trockenschrank bei 110 °C getrocknet. Nach der Trocknung wurden die Formkörper in einem Heißluft- Temperofen bei 400 °C für die Dauer von einer Stunde kalziniert.

Beispiel 2 (Herstellung der Granulate):

1.000 g pyrogenes Titanoxid P25 (Fa. Degussa) wurden in einem Granulierbehälter (Eirich-Mischer, Fa. Eirich) gefüllt und unter langsamer Zugabe von insgesamt 350 ml VE-Wasser bei zunächst 1.000 Upm des Wirblers und schließlich 3.000 Upm granuliert. Während des Granuliervorganges stieg die Temperatur im Mischer von Raumtemperatur auf 50 °C. Nach ca. 9 Minuten war die Granulierung beendet. Anschließend wurde das Granulat bei 200 °C im Drehrohrofen getrocknet. Das so hergestellte Granulat hatte folgende Kornverteilung:

| Korndurchmesser > 1 mm | 39 Gew.-% |
| Korndurchmesser 0,5 - 1 mm | 32 Gew.-% |
| Korndurchmesser < 0,5 mm | 29 Gew.-% |

Beispiel 3 (Herstellung der Pellets):

1.000 g Titanoxid und 100 g Stearinsäure wurden gut durchmischt und in einer Fette-Exacta-Tablettiermaschine zu Pellets der Größe 5 x 3.2 mm verpreßt. Anschließend wurden die Pellets in einer Heißluft-Temper-Apparatur für die Dauer von einer Stunde auf 400 °C bei einem Luftdurchsatz von 60 $m^3$/h erhitzt.

Für die Katalysatortests wurden 12 verschiedene Träger auf der Basis von Titanoxid und Siliziumoxid hergestellt. Tabelle 1 zeigt eine Auflistung dieser 12 Träger mit Angaben zum Herstellverfahren der Ausgangsstoffe (entweder durch Pyrolyse oder durch Fällungsreaktionen) und zur Form der fertigen Katalysatorträger. Die Formkörper wurden entweder nach einem der Beispiele 1 bis 3 hergestellt oder als Formkörper im Handel erworben. Tabelle 1 enthält außerdem noch Angaben zur Struktur des Trägermaterials, zu ihrer BET-Oberfläche und zur Porosität. Zum Vergleich wurde auch ein Aktivkohle-Träger herangezogen (Träger Nr. 13 in Tabelle 1).

Bei den Trägern 1 und 2 dieser Tabelle handelt es sich um erfindungsgemäße Formkörper aus pyrogenem Titanoxid. Die Träger 4 bis 10 bestehen dagegen aus konventionellem durch Fällung erhaltenem Titanoxid.

Die Träger 11 und 12 der Tabelle 1 sind aus pyrogenem $SiO_2$. Die Träger 3 und 6 entsprechen den Trägern 1 und 5. Sie sind jedoch nicht bei 400 °C kalziniert, sondern bei 600 °C. Wie aus Tabelle 1 ersichtlich, führt die höhere Kalzinierungstemperatur zu einer drastischen Verminderung der BET-Oberfläche (von 48 auf 13 $m^2$/g bzw. von 151 auf 9,9 $m^2$/g) und der Porosität. Ursache hierfür ist eine oberhalb 500 °C einsetzende Umwandlung von Anatas in Rutil. Die Träger der Tabelle 1 wurden zur Herstellung der in Tabelle 2 aufgeführten Katalysatoren verwendet.

Imprägnierung und Aktivierung der Katalysatoren wurden wie folgt vorgenommen.

Beispiel 4: Imprägnieren und Reduzieren der Katalysator-Formkörper

Die Katalysator-Formkörper wurden nach der "Incipient-Wetness-Methode" imprägniert. Dazu wurde zunächst die maximale Wasseraufnahmefähigkeit der jeweiligen Formkörper bestimmt und anschließend eine Palladiumchlorid-Lösung angesetzt, deren Volumen ca. 95 % der maximalen Aufnahmefähigkeit der vorgelegten Menge der Formkörper entsprach und deren Palladium- Gehalt auf den gewünschten Palladium-Gehalt des fertigen Katalysators eingestellt wurde. Durch Zugabe von Salzsäure wurde der pH-Wert der Lösung auf den Wert pH = 4 gebracht und die Lösung anschließend über die Formkörper gleichmäßig verteilt. Nachdem die gesamte Lösungsmenge aufgesogen war, wurden die imprägnierten Formkörper im Vakuumtrockenschrank zunächst bei 70 °C und 150 mbar für eine Stunde vorgetrocknet und dann für weitere zwei Stunden bei 24 mbar fertiggetrocknet.

Nach dem Imprägnieren liegen in den Katalysator-Formkörpern homogen verteilte $PdCl_2$-Kristalle vor. Sie wurden zur Aktivierung der Katalysatoren im Wasserstoffstrom zu metallischem Palladium reduziert. Dazu wurden die imprägnierten Formkörper unter Stickstoffspülung auf 230 °C aufgeheizt. Bei Erreichen von 230 °C wurde auf Wasserstoffspülung umgeschaltet. Die einsetzende Reaktion zeigte eine deutliche Exotherme, so daß die Temperatur während der Reduktion auf 280 bis 285 °C anstieg. Nach ca. einer Stunde wurde auf 100 °C abgekühlt und so lange Stickstoff über den Katalysator geleitet, bis Raumtemperatur erreicht war.

Die so erhaltenen erfindungsgemäßen Katalysatoren 1, 2 und 14 bis 17 sind zusammen mit den Vergleichskatalysatoren 3 bis 13 in Tabelle 2 aufgelistet. Die Tabelle 2 gibt den verwendeten Träger, den Palladium-Gehalt und die CO-Adsorption der Katalysatoren an. Die erfindungsgemäßen Katalysatoren 14 bis 17 wurden mit verschiedenen Palladium-Gehalten imprägniert, um den Einfluß des Palladium-Gehaltes auf die Fetthärtung zu bestimmen.

Zum Vergleich der katalytischen Aktivität der verschiedenen Katalysatoren wurden in den Beispielen 6 bis 9 Testhärtungen gemäß Beispiel 5 im Hastelloy-Autoklaven von Figur 1 durchgeführt.

Beispiel 5: Testung der Aktivität der Fettsäure-Härtungskatalysatoren

Der Hastelloy-Autoklav besteht aus einem Gefäß (1) mit einem Fassungsvermögen von einem Liter. Der Deckel (4) des Autoklaven weist eine Durchführung für den Begasungsrührer (8), sowie über Ventil (9) einen Gaseinlaß (5), einen Gasauslaß (6) über Durchflußmesser (10) und ein Tauchrohr (7) zur Probennahme auf.

Zur Bestimmung der Katalysatoraktivität wurde das Gefäß mit 500 g Rohfettsäure (2) befüllt und der Katalysatorkorb (3) mit 5 g Katalysator und 55 g Aktivkohle beschickt. Nach dem Einbau des Katalysatorkorbes wurde der Autoklav mit dem Deckel verschlossen und auf 220 °C aufgeheizt. Die Härtung der Fettsäure erfolgte dann bei einem Wasserstoffdruck von 2 MPa, einem Wasserstoffdurchfluß von 1.000 $1H_2$/h und einer Rührerdrehzahl von 1.700 Upm. Über das Tauchrohr (7) wurde stündlich eine Probe der Fettsäure zur Bestimmung von Jod- und Säurezahl entnommen. Nach 5 Stunden wurden die Testhärtungen beendet.

Für die Testhärtungen wurden verschiedene Chargen Rohfettsäure aus Rindertalg verwendet. Die wesentlichen Bestandteile von Rindertalg sind Palmitinsäure (20 - 37 %) mit 16 C-Atomen, Stearinsäure (15 - 30 %) mit 18 C-Atomen und die einfach ungesättigte Ölsäure (20 - 50 %) mit ebenfalls 18 C-Atomem. Die genaue Zusammensetzung hängt von der Herkunft des Rindertalgs ab und kann von Charge zu Charge schwanken. Für die folgenden Beispiele wurden drei verschiedene Chargen Rindertalg mit geringfügig voneinander abweichenden Jod- und Säurezahlen eingesetzt.

Beispiel 6: Zeitlicher Härtungsverlauf von Fettsäurecharge 1 mit Katalysator 1.

Tabelle 3 gibt den zeitlichen Härtungsverlauf von Fettsäurecharge 1 bei Verwendung des erfindungsgemäßen Katalysators 1 wider. Nach 5 Stunden Härtung hat sich die Jodzahl vom Anfangswert 55,9 auf 6,9 erniedrigt. Die Säurezahl ist dagegen nur wenig von 193,4 auf den Wert 182,5 gesunken.

Beispiel 7: Vergleich der Aktivität verschiedener Katalysatoren bei Härtung der Fettsäure-Charge 1.

Tabelle 4 gibt die Ergebnisse der Testhärtung nach jeweils 5 Stunden wider. Es wurden die erfindungsgemäßen Katalysatoren 1 und 2 mit den Vergleichskatalysatoren 3, 5, 6, 7, 8, und 13 verglichen.

Die erfindungsgemäßen Katalysatoren 1 und 2 auf der Basis von pyrogenem Titanoxid liefern die geringste Jodzahl und bewirken auch die geringste Abnahme der Säurezahl. Vergleichskatalysator 3, der gegenüber Katalysator 1 bei 600 °C kalziniert wurde, weist ähnlich schlechte Ergebnisse auf wie die konventionellen Vergleichskatalysatoren auf der Basis von gefälltem Titanoxid. Vergleichskatalysator 13, der als Träger Aktivkohle verwendet, kommt bei der Endjodzahl dem erfindungsgemäßen Katalysator am nächsten, führt aber zu einer starken Abnahme der Säurezahl.

Beispiel 8: Vergleich der Aktivität verschiedener Katalysatoren bei Härtung der Fettsäure-Charge 2.

Tabelle 5 gibt die Ergebnisse der Testhärtungen nach jeweils 5 Stunden wider. Es wurde der erfindungsgemäße Katalysator 1 mit den Vergleichskatalysatoren 4, 9, 10, 11, und 12 verglichen.

Auch in diesem Beispiel liefert der erfindungsgemäße Katalysator 1 die besten Ergebnisse. Die Katalysatoren 11 und 12 mit Trägern aus pyrogenem $SiO_2$ liegen mit ihren Werten auf dem Niveau der schlechtesten konventionellen Katalysatoren.

Die Beispiele 7 und 8 zeigen, daß die Vergleichskatalysatoren auf der Basis von gefälltem Titanoxid, pyrogener Kieselsäure oder Aktivkohle trotz teilweise erheblich größerer BET-Oberfläche und CO-Adsorption schlechtere Härtungsergebnisse liefern als die erfindungsgemäßen Katalysatoren 1 und 2. Das belegt eindeutig, daß die gute katalytische Aktivität der erfindungsgemäßen Katalysatoren nicht nur durch die Metalldispersion bedingt ist, sondern auch wesentlich auf das erfindungsgemäße Trägermaterial aus pyrogenem Titanoxid zurückzuführen ist.

Beispiel 9: Abhängigkeit der katalytischen Aktivität vom Palladium-Gehalt.

Zur Untersuchung der Abhängigkeit der katalytischen Aktivität des erfindungsgemäßen Katalysators wurden die Katalysatoren 14 bis 17 der Tabelle 2 unter Verwendung des erfindungsgemäßen Trägers Nr. 1 mit verschiedenen Palladium-Gehalten angefertigt (0,5; 1; 2 und 5 Gew.-%). Die Härtungsergebnisse an Fettsäure- Charge 1 nach jeweils 5 Stunden zeigt Tabelle 6.

Die Endjodzahl nimmt kontinuierlich mit steigenden Palladium-Gehalten ab. Selbst bei einer Beladung mit 5 Gew.-% Palladium ist noch keine Sättigung erkennbar. Das gilt in analoger Weise auch für Katalysatoren nach dem Stand der Technik. Der Vorteil des erfindungsgemäßen Katalysators liegt jedoch darin begründet, daß durch Ausnutzung des Verstärkungseffektes des Trägermaterials dieselbe katalytische Aktivität mit geringeren Palladium-Beladungen und somit mit geringeren Edelmetallkosten erzielt werden kann.

Beispiel 10: Vergleich der Aktivität von Katalysator 1 und 13 bei der kontinuierlichen Härtung von Rohfettsäure im Rieselbett.

Die erfindungsgemäßen Katalysatoren eignen sich wegen ihrer geringen Vergiftbarkeit besonders für die kontinuierliche Härtung von Rohfettsäure im Rieselbett.

Für die Versuche zur kontinuierlichen Fettsäurehärtung wurde die in Figur 2 dargestellte Anlage eingesetzt. Der Einsatzstoff (11) (ungesättigte Fettsäure) wurde aus einer Vorlage (12) mit der Pumpe (13) in die Härtungsanlage dosiert, dabei auf den erforderlichen Reaktionsdruck verdichtet und mit komprimiertem Wasserstoff (14) als 2-Phasen-Gemisch im Erhitzer (15) auf Reaktionstemperatur erwärmt und zum Reaktor (16) weitergeleitet.

Der Reaktor bestand aus einem senkrecht angeordneten Rohr und enthielt eine Schüttung der zu testenden Katalysatoren, die im Reaktor nach unten hin durch eine Siebplatte gehalten wurde. Über einen externen Heiz-/Kühlkreislauf (17) wurde die Reaktionswärme abgeführt.

Das Gemisch aus vorgeheiztem Einsatzstoff und Wasserstoff wurde am Kopf (18) des Reaktors eingeführt und mit Hilfe eines Gas/Flüssig-Verteilersystems gleichmäßig auf die Oberfläche des Katalysatorbetts aufgebracht. Beide Phasen durchströmten die Katalysatorschüttung im Gleichstrom von oben nach unten.

Das flüssige Produkt und der nicht umgesetzte Wasserstoff wurden nach Verlassen des Reaktors in einem Wärmetauscher (19) abgekühlt und einem Abschneider (20) zugeführt. Hier wurde die Hauptmenge des Produkts vom Gasstrom getrennt und in die Produktvorlage (21) entspannt.

Das Gas wurde weiter abgekühlt (22) und in einem zweiten Abschneider (23) von verbliebenen Produktanteilen getrennt. Diese wurden ebenfalls in die Produktvorlage (21) entspannt. Das Gas verließ die Härtungsanlage über ein Druckhalteventil (24). Die Hydrierung der Fettsäure wurde vorzugsweise mit einem Überschuß an Wasserstoff durchgeführt.

Den Vergleich des erfindungsgemäßen Katalysators 1 mit dem besten Vergleichskatalysator nach dem Stand der Technik auf Aktivkohle als Träger zeigt Tabelle 7. Der erfindungsgemäße Katalysator wurde in Granulatform eingesetzt, der Aktivkohlekatalysator lag in Form von Strangpreßlingen vor. Das Rieselbett wurde mit LHSV-Werten von 1,2 h$^{-1}$ bei Temperaturen von 170 °C betrieben.

Beispiel 11: Vergleich der Aktivität von Katalysator 1 und 13 bei der kontinuierlichen Härtung von destillierter Fettsäure im Rieselbett.

Der Vergleich wurde in der schon in Beispiel 10 beschriebenen Anlage durchgeführt. Die Ergebnisse dieses Vergleichs sind in Tabelle 8 aufgelistet.

Der erfindungsgemäße Katalysator zeigte sich in den letzten beiden Beispielen auch bei Anwendung im kontinuier lichen Rieselbettverfahren dem Aktivkohle-Katalysator weit überlegen. Das wurde besonders bei der Härtung von Rohfettsäure (Tabelle 7) und der damit verbundenen hohen Belastung mit Katalysatorgiften deutlich. Der erfindungsgemäße Katalysator führte in diesem Fall zu einer um eine Größenordnung kleineren Jodzahl, was die geringe Vergiftbarkeit des erfindungsgemäßen Katalysators belegt.

Tabelle 1: Porositäts- und Oberflächendaten der anorganischen Träger auf Basis TiO2, SiO2 und Aktivkohle

| Träger Nr. | Material | Herstellung der Ausgangsstoffe | Formkörper | Struktur | BET-Oberfläche | Porosität [ml/g] | | | |
|---|---|---|---|---|---|---|---|---|---|
| | | | | | | mikro | meso | makro | gesamt |
| 1 | TiO2 (Degussa P25) | Pyrolyse | Granulat/Bsp. 2 | Rutil/Anatas | 48 | -- | 0.27 | 0.06 | 0.33 |
| 2 | TiO2 (Degussa P25) | Pyrolyse | Extrudat/Bsp. 1 | Rutil/Anatas | 46 | -- | 0.25 | 0.05 | 0.30 |
| 3 | TiO2 (Degussa P25) | Pyrolyse *) | Granulat/Bsp. 2 | Rutil/Anatas | 13 | -- | 0.05 | 0.13 | 0.18 |
| 4 | TiO2·nH2O(Metatitans.) | Fällung | Pellets/Bsp. 3 | röntgenamorph | 287 | 0.14 | 0.1 | 0.13 | 0.37 |
| 5 | TiO2 Fa. Harshaw | Fällung | Pellets/käufl. | Spuren Rutil/ Anatas | 151 | -- | 0.38 | 0.03 | 0.41 |
| 6 | TiO2 Fa. Harshaw | Fällung *) | Pellets/käufl. | Spuren Rutil/ Anatas | 9.9 | -- | 0.02 | 0.32 | 0.34 |
| 7 | TiO2 Fa. Südchemie | Fällung | Pellets/käufl. | Anatas | 32 | -- | 0.13 | 0.13 | 0.26 |
| 8 | TiO2 Fa. Südchemie | Fällung | Pellets/käufl. | Anatas | 40 | -- | 0.12 | 0.43 | 0.55 |
| 9 | TiO2 Fa. Bayer PK 5585/1 | Fällung | Pellets/Bsp. 3 | Anatas | 99 | -- | 0.32 | 0.32 | 0.64 |
| 10 | TiO2 Fa. Bayer PK 5585 | Fällung | Pellets/Bsp. 3 | Anatas | 182.5 | 0.08 | 0.21 | 0.28 | 0.57 |
| 11 | SiO2 Fa. Degussa | Pyrolyse | Pellets/käufl. | röntgenamorph | 45 | -- | -- | -- | 0.6 |
| 12 | SiO2 Fa. Degussa | Pyrolyse | Pellets/käufl. | röntgenamorph | 270 | -- | -- | -- | 0.75 |
| 13 | Aktivkohle | | Extrudat | röntgenamorph | 1340 | | | | |

*): kalziniert bei 600 °C

EP 0 505 863 B1

Tabelle 2

| Katalysatoren für Testhärtungen | | | | |
|---|---|---|---|---|
| Prüfling | Träger Nr. | Oberfläche [m²/g] | Pd-Gehalt [%] | CO-Adsorption [mlCo/g] |
| Katalysator 1 | 1 | 48 | 2,0 | 1,66 |
| Katalysator 2 | 2 | 46 | 2,0 | 1,66 |
| Vergleichskatalysator 3 | 2 | 13 | 2,0 | 0,54 |
| Vergleichskatalysator 4 | 3 | 287 | 2,0 | 0,41 |
| Vergleichskatalysator 5 | 4 | 151 | 2,0 | 0,99 |
| Vergleichskatalysator 6 | 5 | 9,9 | 2,0 | 0,27 |
| Vergleichskatalysator 7 | 6 | 32 | 2,0 | 1,28 |
| Vergleichskatalysator 8 | 7 | 40 | 2,0 | 1,62 |
| Vergleichskatalysator 9 | 8 | 99 | 2,0 | 1,86 |
| Vergleichskatalysator 10 | 9 | 182 | 2,0 | 1,75 |
| Vergleichskatalysator 11 | 10 | 45 | 2,0 | 0,44 |
| Vergleichskatalysator 12 | 11 | 270 | 2,0 | 1,21 |
| Vergleichskatalysator 13 | 12 | 1340 | 2,0 | 1,91 |
| Katalysator 14 | 1 | 48 | 0,5 | |
| Katalysator 15 | 1 | 48 | 1,0 | |
| Katalysator 16 | 1 | 48 | 2,0 | |
| Katalysator 17 | 1 | 48 | 5,0 | |

Tabelle 3

| Testhärtung von FS-Charge 1 mit Katalysator Nr. 1 | | | | |
|---|---|---|---|---|
| Versuchszeit [h] | Temp. [°C] | Druck [MPa] | Jodzahl | Säurezahl |
| -0.53 | 75 | 0,3 | 55.9 | 193.4 |
| 0.0 | 220 | 2,0 | - | - |
| 1.0 | 220 | 2,0 | 28.6 | - |
| 2.0 | 220 | 2,0 | 19.3 | - |
| 3.0 | 220 | 2,0 | 14.2 | - |
| 5.0 | 220 | 2,0 | 6.9 | 182.5 |
| FS = Fettsäure | | | | |

Daten zur Fettsäurecharge 1:
Jodzahl nach Wijs (vgl. DAB 7):     55.9 g $J_2$/100 g FS
Säurezahl (vgl. DAB 7):             193.4 mg KOH/g FS
Daten zur Hydrierung:               Temperatur 220 °C
                                    $H_2$-Druck 2,0 MPa
                                    Dauer 5 h

10

Tabelle 4

| TiO$_2$-Trägerkatalysatoren mit 2 Gew.-% Pd (FS-Charge 1) | | | |
|---|---|---|---|
| Prüfling | Träger Nr. | Jodzahl nach Wijs | Säurezahl |
| Katalysator 1 | 1 | 6.9 | 182.5 |
| Katalysator 2 | 2 | 9.6 | 180.7 |
| Vergleichskatalysator 3 | 2 | 26.5 | 172.0 |
| Vergleichskatalysator 5 | 4 | 36.1 | 172.0 |
| Vergleichskatalysator 6 | 5 | 39.7 | 178.1 |
| Vergleichskatalysator 7 | 6 | 35.4 | 180.0 |
| Vergleichskatalysator 8 | 7 | 27.7 | 178.8 |
| Vergleichskatalysator 13 | 12 | 11.2 | 173.8 |

Tabelle 5

| TiO$_2$-Trägerkatalysatoren mit 2 Gew.-% Pd (FS-Charge 2) | | | |
|---|---|---|---|
| Prüfling | Träger Nr. | Jodzahl nach Wijs | Säurezahl |
| Katalysator 1 | 1 | 10.0 | 189.2 |
| Vergleichskatalysator 4 | 3 | 29.6 | 190.4 |
| Vergleichskatalysator 9 | 8 | 21.8 | 185.8 |
| Vergleichskatalysator 10 | 9 | 31.4 | 187.2 |
| Vergleichskatalysator 11 | 10 | 31.7 | 184.7 |
| Vergleichskatalysator 12 | 11 | 33.9 | 186.5 |

Daten zur Fettsäurecharge 2:
Jodzahl:                    49.6 g J$_2$/100 g FS
Säurezahl:                 197.8 mg KOH/g FS

Tabelle 6: Vergleich der Aktivität von pyrogenen Titanoxid-Katalysatoren mit
unterschiedlicher Pd-Beladung (0.5 bis 5 Gew.-%)

| Prüfling | Träger Nr. | Pd-Gehalt [Gew.-%] | Druck [MPa] | Temp. [°C] | Zeit [h] | Jodzahl | Säurezahl |
|---|---|---|---|---|---|---|---|
| Katalysator 14 | 1 | 0.5 | 2.0 | 220 | 5 | 45.8 | 177.7 |
| Katalysator 15 | 1 | 1.0 | 2.0 | 220 | 5 | 27.1 | 177.0 |
| Katalysator 16 | 1 | 2.0 | 2.0 | 220 | 5 | 6.9 | 182.5 |
| Katalysator 17 | 1 | 5.0 | 2.0 | 220 | 5 | 1.4 | 183.7 |

FS-Charge: 1;   Jodzahl: 55.9;   Säurezahl: 193.4

EP 0 505 863 B1

Tabelle 7: Vergleich der Aktivität von Pd-Aktivkohle- und Pd-TiO2-Katalysatoren im Rieselbett mit Rohfettsäure (Jodzahl = 55.4)

| Prüfling | | Träger Nr. | LHSV [1/h] | Temp. [°C] | Umsatz [%] | Jodzahl | Säurezahl |
|---|---|---|---|---|---|---|---|
| Katalysator | 1 | 1 | 1.20 | 169 | 99.4 | 0.30 | 194.8 |
| Vergleichskatalysator 13 | | 12 | 1.20 | 171 | 91.4 | 4.66 | 194.5 |

EP 0 505 863 B1

Tabelle 8: Vergleich der Aktivität von Pd-Aktivkohle- und Pd-TiO2-Katalysatoren im Rieselbett mit destillierter Fettsäure (Jodzahl = 54.2)

| Prüfling | Träger Nr. | LHSV [1/h] | Temp. [°C] | Umsatz [%] | Jodzahl | Säurezahl |
|---|---|---|---|---|---|---|
| Katalysator 1 | 1 | 1.07 | 170 | 99.7 | 0.16 | 202.6 |
| Vergleichskatalysator 13 | 12 | 1.07 | 170 | 98.6 | 0.74 | 203.4 |

**Patentansprüche**

1.  Katalysator zur Härtung ungesättigter Fettsäuren aus einem innigen Gemisch aus pyrogenem Titanoxid und fein verteiltem Palladium-Metall,

14

**dadurch gekennzeichnet**,

daß das pyrogene Titanoxid eine Röntgenstruktur aus 20 bis 40 % Rutil und 80 bis 60 % Anatas aufweist und zu Formkörpern mit einer BET-Oberfläche von 50 ± 15 m$^2$/g und einem Gesamtporenvolumen von 0,25 bis 0,75 ml/g verformt ist und daß das Palladium-Metall im Formkörper homogen verteilt vorliegt, einen Anteil am Gesamtgewicht des Katalysators von 0,5 bis 10 Gew.-% hat und eine Kohlenmonoxid-Adsorption von 1,0 bis 2,0 ml CO/g Katalysator aufweist.

2. Verfahren zur Herstellung des Katalysators nach Anspruch 1 durch Verformen des pyrogenen Titanoxids unter Zusatz üblicher Verarbeitungshilfsmittel zu gewünschten Formkörpern im Grünzustand, Trocknen und anschließendes Kalzinieren der Grünkörper zur Entfernung der Verarbeitungshilfsmittel, Imprägnieren der kalzinierten Titanoxid-Formkörper mit einer wäßrigen Palladiumsalz-Lösung, Trocknen des imprägnierten Formkörpers und Reduzieren und Aktivieren dieser Katalysatorvorstufe im Wasserstrom,

**dadurch gekennzeichnet**,

daß die Titanoxid-Grünkörper zunächst 12 Stunden bei 110°C getrocknet und dann für die Dauer von 0,5 bis 5, vorzugsweise 1 Stunde bei Temperaturen von 350 bis 480, insbesondere um 400°C kalziniert werden, der pH-Wert, der zum Imprägnieren eingesetzten Palladiumsalz-Lösung auf pH = 4 eingestellt wird und Menge und Konzentration der Lösung so bemessen werden, daß der Palladium-Anteil des fertigen Katalysators 0,5 bis 10 % des Gewichtes beträgt, das Trocknen des imprägnierten Formkörpers in einem Vakuum-Trockenschrank bei einem Druck von 20 bis 150 mbar und Temperaturen von 70 bis 100°C für die Dauer von 2 bis 3 Stunden erfolgt und die abschließende Reduktion und Aktivierung des Katalysators im Wasserstoffstrom bei Temperaturen von 150 bis 300°C für die Dauer von 0,5 bis 10 Stunden durchgeführt wird.

3. Verfahren zur kontinuierlichen Härtung von Rohfettsäuren im Rieselbett durch Mischen der Rohfettsäuren mit komprimiertem Wasserstoffgas, Erhitzen dieser Mischung auf Reaktionstemperatur, Leiten der Mischung über einen Katalysator, Abkühlen des Reaktionsgemisches und Abtrennen des Produktes vom nicht umgesetzten Wasserstoff,

**dadurch gekennzeichnet**,

daß als Katalysator ein Katalysator gemäß Anspruch 1 eingesetzt wird.

**Claims**

1. Catalyst for the hardening of unsaturated fatty acids, consisting of an intimate mixture of pyrogenic titanium oxide and finely divided palladium metal,

characterised in that

the pyrogenic titanium oxide has an X-ray structure of from 20 to 40% rutile and from 80 to 60% anatase and is formed into moulded bodies having a BET surface area of 50 ± 15 m$^2$/g and a total pore volume of from 0.25 to 0.75 ml/g and in that the palladium metal is homogeneously distributed within the moulded body, amounts to a proportion of the total weight of the catalyst of from 0.5 to 10% by weight and has a carbon monoxide adsorption of from 1.0 to 2.0 CO/g of catalyst.

2. Process for the preparation of the catalyst according to claim 1 by forming the pyrogenic titanium oxide, with the addition of conventional processing agents, into the desired moulded bodies in the green state, drying and subsequently calcining the green bodies to remove the processing agents, impregnating the calcined titanium oxide moulded bodies with an aqueous palladium salt solution, drying the impregnated moulded body and reducing and activating this catalyst precursor in a stream of hydrogen,

characterised in that

the titanium oxide green bodies are first dried at 110°C for 12 hours and then calcined at temperatures of from 350 to 480°C, in particular in the region of 400°C, for a period of from 0.5 to 5 hours, preferably 1 hour, the pH value of the palladium salt solution used for impregnation is adjusted to a pH value equal to 4, and the quantity and concentration of the solution are calculated so that the palladium content of the finished catalyst is from 0.5 to 10% of the weight of the latter, drying of the impregnated moulded body is carried out in a vacuum drying cupboard at a pressure of from 20 to 150 mbar and at temperatures of from 70 to 100°C for a period of from 2 to 3 hours and the final reduction and activation of the catalyst in the stream of hydrogen is carried out at temperatures of from 150 to 300°C for a period of from 0.5 to 10 hours.

3. Process for the continuous hardening of crude fatty acids in a trickling bed by mixing the crude fatty acids with compressed hydrogen gas, heating this mixture to reaction temperature, passing the mixture over a catalyst, cooling the reaction mixture and separating the product from the unreacted hydrogen, characterised in that

the catalyst used is a catalyst according to claim 1.


**Revendications**

1. Catalyseur pour durcir les acides gras non saturés à partir d'un mélange intime d'oxyde de titane pyrogéné et de métal de palladium finement divisé, caractérisé :
   - en ce que l'oxyde de titane pyrogéné comporte une structure aux rayons X de 20 à 40 % de rutile et de 80 à 60 % d'anatase et est usiné en corps moulés ayant une surface BET de 50 ± 15 $m^2/g$ et un volume total de pores de 0,25 à 0,75 ml/g, et
   - en ce que le métal de palladium est présent dans le corps de forme avec une répartition homogène, a une proportion sur le poids total du catalyseur de 0,5 à 10 % en poids et comporte une adsorption de monoxyde de carbone de 1,0 à 2,0 ml de CO/g de catalyseur.

2. Procédé de préparation du catalyseur selon la revendication 1, par usinage de l'oxyde de titane pyrogéné avec addition d'adjuvants de traitement usuels en corps moulés désirés à l'état brut, par séchage et calcination successive des corps bruts pour l'élimination des adjuvants de traitement, imprégnation des corps moulés d'oxyde de titane calcinés avec une solution aqueuse de sel de palladium, séchage du corps moulé imprégné et réduction et activation de ces progéniteurs de catalyseurs dans un courant d'eau, caractérisé en ce que les corps bruts d'oxyde de titane sont d'abord séchés pendant 12 heures à 110°C et ensuite sont calcinés pendant la durée de 0,5 à 5 heures, de préférence 1 heure à des températures de 350 à 480, en particulier à 400°C, la valeur du pH, qui est ajustée pour l'imprégnation d'une solution de sel de palladium mise en oeuvre à pH = 4 et la quantité et la concentration de la solution sont mesurées, de façon que la proportion de palladium du catalyseur terminé se monte à 0,5 jusqu'à 10 % du poids, le séchage du corps de forme imprégné a lieu dans une étude à vide à une pression de 20 à 150 mbars, à des températures de 70 à 100°C pour une durée de 2 à 3 heures et la réduction et l'activation suivantes du catalyseur est réalisée dans un courant d'hydrogène à des températures de 150 à 300°C pour la durée de 0,5 à 10 heures.

3. Procédé pour durcir en continu des acides gras bruts dans le lit à ruissellement des acides gras bruts avec du gaz hydrogène comprimé, chauffage de ce mélange à la température réactionnelle, amenée du mélange sur un catalyseur, refroidissement du mélange réactionnel et séparation du produit de l'hydrogène n'ayant pas réagi, caractérisé en ce que l'on met en oeuvre comme catalyseur un catalyseur selon la revendication 1.

EP 0 505 863 B1

Fig. 1

17

Fig. 2